# EUROPEAN PATENT APPLICATION

(11) **EP 4 449 855 A1**
(43) Date of publication of application: **23.10.2024**
(21) Application number: 23168657.7
(22) Date of filing: 19.04.2023
(51) Int. Cl.: A01G 9/02, A01G 31/02

(54) **A MULTILAYER CONCRETE WALL PANEL FOR GREENING OF VERTICAL SURFACES AND METHOD FOR PRODUCTION THEREOF**

(71) Applicant: Vilniaus Gedimino technikos universitetas, 10223 Vilnius (LT)
(72) Inventor: JAKUBOVSKIS, Ronaldas, 13183 Uzukene, Vilniaus r. sav. (LT); MALAISKIENE, Jurgita, 08444 Vilnius (LT); GRIBNIAK, Viktor, 10211 Vilnius (LT)
(74) Representative: Pranevicius, Gediminas

(57) **Abstract**

The present invention relates to a multilayer wall greening panel (1) for planting plants on a wall surface for greening of vertical surfaces. The multilayer wall panel (1) for greening of vertical surfaces is characterized in comprising a structural layer (2) produced from the high-performance fiber-reinforced concrete with a thickness from 20 to 50 mm, with the aggregate size ≤4mm, ensuring the strength and stiffness of the wall panel (1); a second layer (3) made from lightweight expanded clay pervious concrete suitable for biological colonization, having a variable thickness of 20 mm and 50 mm, forming regular 30 mm deep pattern of cavities (5) at the surface specifically designed as initial plant growth regions; biological boosters (4) of a triangular shape, located in the cavities (5) and designed to accelerate the initial colonization and plant growth on a multilayer panel (1), composed from the local forest topsoil and bio-degradable paper pulp to increase the initial stiffness of the biological boosters (4); and a drip line irrigation system consisting of pipes (7) arranged in grooves (8) on the top of the multilayer wall panels (1).

## Description

### TECHNICAL FIELD

The present invention relates to a wall greening panel for planting plants on a wall surface for greening of vertical surfaces.

### BACKGROUND ART

Green walls reduce the energy costs for heating and cooling, captures carbon dioxide and particulate matter, increases biodiversity and has a positive impact on human health (Ottelé, M. (2011). The green building envelope. Vertical Greening, Delft*;* Manso, M., Teotónio, I., Silva, C. M., & Cruz, C. O. (2021). Green roof and green wall benefits and costs: A review of the quantitative evidence. Renewable and Sustainable Energy Reviews, 135, 110111). The green walls also known as "vertical greening systems" can be divided into two main groups: (1) green facades and (2) living walls *(*Manso, M., & Castro-Gomes, J. (2015). Green wall systems: A review of their characteristics. Renewable and sustainable energy reviews, 41, 863-871*).* The first group refers to the classic facades with climbing plants, whereas the second group represents quite a recent innovation integrating plants directly on the vertical surfaces. More specifically, living walls can be composed from hydroponic felt-based systems, as described in FR2747265A1, where a green construction element, forming a vertical surface of the construction, includes a porous concrete element and a coating on at least one of the surfaces of the porous concrete, directly in contact with the surface, the coating, which is favourable to the development of plants, includes a plant or a seed of the plant, and the porous concrete having a porosity of between 10% and 40% in the hardened state thereof, before application of the coating, so as to be able to render the vertical surface of the construction green.

Also the living walls can be composed from different modular systems, one of which is disclosed in US7757436B2. A greening device for facades or walls, consisting mainly of a support structure fixed on the facade to be covered and by at least two modules with flat structure and square or rectangular profile, containing a cultivating substrate and including on one of its large surface apparent vegetation elements, the modules being removably mounted on the support structure substantially concealing the latter. The support structure includes at least two spaced apart vertical rails whereon the modules are mounted in vertical rows being located away from the facade or wall and being individually detachable, each module being in the form of a box with globally flat parallelepiped structure of slight thickness compared to its lateral dimensions, the open side of the box opposite the base being closed with an open-work wall. The vertical opposite side walls have catching elements designed to co-operate with reception sites on the mounting rails.

Also the living walls can be composed from plants directly growing on concrete walls, disclosed in WO2014001594A1. The latter invention relates to a cement-based multilayer assembly that can be used as a biological support for building facades or other structures, said assembly comprising: an optionally-newly-installed structural concrete layer, an anchoring layer, a biological layer made from a cement-based material, and a waterproofing cladding layer including cavities in which the biological layer is in direct contact with the environment. The biological layer is made from traditionally produced concrete or mortar and includes aggregates of the siliceous or expanded clay type.

Living wall systems has an advantage of quick greening without restrictions to building height, as in case of climbing plants. However, existing living wall systems are quite expensive, with average installation costs reaching 400-600 or even 750 EUR/m². Moreover, the long-term maintenance costs several times exceed the installation cost [13]. High cost of living walls is mostly related to complex installation of felts, plant modules, anchoring and irrigation systems. To reduce the price of living wall and minimize the maintenance expenses, greening of specifically designed concrete walls were proposed in several studies and patents. The technology presented in WO2011086518A1 employs a structure composed from three layers: structural ultra-high performance concrete (UHPC), substrate and foam-like surface ceramic layer, where seeds are planted. The plant roots from ceramic layer grow into a soil substrate forming green regions on a building facade. However, the panels during the seed germination and initial growth period must be held horizontally and constantly irrigated that complicates the installation process. Moreover, the ceramic layer is highly expensive, that also hinder the application of this system.

The simpler and cheaper alternative was proposed in US20180310488A1, where external pervious concrete layer was suggested for plant growth. However, a low long-term survivability of plants was achieved (only grasses, sedums, and mosses survived after first winter) due to the flat surface of the external layer.

The alternative approach to green the concrete surface is using bio-receptive concrete mixes. Bio-receptivity is described as the aptitude of material to be colonised by living organisms without necessarily undergoing any bio-deterioration. Theoretically, bio-receptive material would require any additional maintenance or irrigation, as lower plants (bryophytes, lichens, fungi and algae) colonize the surface naturally. Several attempts were made to develop bio-receptive concrete panels mimicking the natural growth of lichens and mosses on old facades and sculptures *(*Mustafa, K. F., Prieto, A., & Ottele, M. (2021). The Role of Geometry on a Self-Sustaining Bio-Receptive Concrete Panel for Facade Application. Sustainability, 13(13), 7453). Nevertheless, growth of mosses and algae were obtained only under ideal greenhouse conditions. Bio-receptive panels showed a rapid degradation of the developed bio-film after exposure in real climatic conditions *(*Veeger, M., Prieto, A., & Ottelé, M. (2021). Exploring the Possibility of Using Bioreceptive Concrete in Building Façades. Journal of Facade Design and Engineering, 9(1), 73-85). Consequently, it can be concluded that greening a wall without irrigation system would be possible in only very specific climatic conditions.

### SUMMARY OF THE INVENTION

The proposed system presents a new approach to green the concrete surface. It combines the ability of specially designed concrete to host the living organisms (bio-receptivity) with the appropriate material and surface design for long-term (at least 20 years) growth of plants. In the presented approach, bio-colonization of concrete wall is achieved using specifically designed biological boosters integrated inside the external wall surface. Such approach allows avoiding complex calibration of concrete properties that was mostly achieved using specific cement types or admixtures. More importantly, using ordinary Portland cement for external pervious concrete layer simplifies the production and reduces the price of the multilayer wall assembly. After the initial colonization in the specifically designed areas (1-2 years after panel installation), the pH level of surface concrete drops due to natural carbonation. This in turn allows for further development of plants on a new surfaces. To facilitate the production and installation process, the proposed system is composed from 400x600 mm panels with the integrated irrigation system. Moreover, integration of biological boosters as a formwork also simplifies the panel manufacturing.

### BRIEW DESCRIPTION OF THE DRAWINGS

The present invention will further be described in more detail with references to the accompanying drawings, wherein:
Fig. 1 shows the construction of a concrete wall panel for greening of vertical surfaces in front and sectional views;
Fig. 2 shows bottom and cross-sectional views of a separate biological booster;
Fig. 3 represents views of different stages of manufacturing the concrete panel for greening of vertical surfaces.

### DETAILED DESCRIPTION OF THE INVENTION

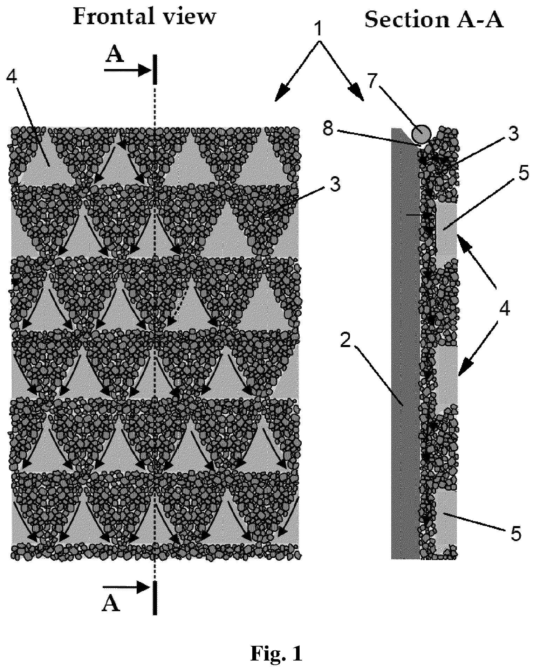

The multilayer concrete wall panel 1, shown in Fig. 1, is designed to promote bio-colonization, adhesion and growth of organisms and plants in specific areas of the outer surface. The developed multilayer concrete wall panel 1 comprises three different components: the structural layer 2 made from a high-performance fiber-reinforced concrete; the second layer 3 produced from lightweight pervious concrete suitable for biological colonization; and biological boosters 4 integrated into the layer 3 designed to accelerate the initial colonization and plant growth on a multilayer panel 1. Such a wall panel allows different functionalities to be integrated.

As can be seen in Fig. 1, the multilayer concrete wall panel 1 comprises two adjacent layers, i.e. the inner structural layer 2, which once arranged in place is directed towards the facade of the building, and the outer layer 3 facing outwards. The structural layer 2 ensures the strength and stiffness of the entire wall panel 1. Due to dense structure and low water permeability (permeability coefficient K<10⁻¹⁴ m/sec), the layer 2 also serves as a barrier for atmospheric and irrigation moisture. The layer 2 is produced from a high-performance fiber-reinforced concrete, with a thickness varying from 20 to 50 mm, depending on the preferred size of the wall panel 1, with aggregate size ≤4mm. Synthetic fibres allow improving durability and impact resistance of the wall panel 1. Besides, such a hybrid system permits avoiding steel meshes and, hence, reducing the layer thickness. The residual tension strength and modulus of rupture of the layer 2 exceed 2 MPa and 10 MPa, respectively. These mechanical characteristics allow avoiding structural bar reinforcement and reducing the panel thickness. The 28-day compressive strength of the layer 2 exceeds 80 MPa, enabling to use different mechanical anchored systems, such as dowel, kerf or undercut, to fix the wall panels 2 to the facade of the building in a vertical position. The design loading induced by a multilayer wall panel 1 with 30 mm thickness of the layer 2 is 0.95-1.0 kN/m².

The second layer 3 is produced from lightweight pervious concrete suitable for biological colonization. The layer 3 has a variable thickness of 20 mm and 50 mm, forming a regular 30 mm deep pattern of cavities 5 at the surface designed for biological boosters 4. These cavities 5 are specifically designed as initial plant growth regions. Expanded clay coarse aggregates (2/4 mm, 4/8 mm and 8/16 mm fractions), cement matrix and additives form the layer 3, increasing its porosity and water permeability. The low density (<750 kg/m³) of the layer 3 reduces the self-weight, decreases the coefficient of heat transfer and improves the acoustical characteristics of the wall panel 1. Most importantly, due to extremely porous structure of the layer 3 (porosity exceeding 25%) the irrigation and atmospheric water easily passes through the concrete structure reaching plant roots (infiltration rate 0.02 m/s <I<0.04 m/s); the expanded clay aggregates accumulate water. The compression strength and freeze-thaw resistance of the layer 3 should exceed 2.5 MPa and 50 cycles.

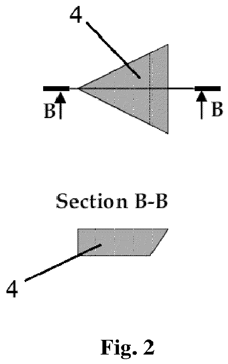

The main purpose of the biological boosters 4, as shown in Fig. 2, is to accelerate the initial colonization and plant growth on a multilayer wall panel 1. As the ordinary Portland cement is used for the layer 3, the plant growth is not expected directly on the layer 3 within the first one-two years after the panel manufacturing due to high surface pH values (the expected 12<pH<13). To speed up the colonization, specifically designed cavities 5 filled with biological boosters 4 of triangular shape are integrated into the surface of the multilayer wall panel 1. The dimensions of the cavities 5 are selected according to the typical tuft size of moss. Moreover, cavities 5 are specifically designed to trap water, particulate matter and form microclimate promoting the colonization of plants. The typical developed plants are expected from *bryophyte* and *lithophyte* families, that are already present in the forest topsoil. The biological boosters 4 can be additionally enriched with *sedum, saxifraga* and *jovibarba* genus seeds, grass seeds (such *as festuca* or *poa* genus) or alternatively flowering plants (such as *geranium, aubrieta* or *cymbalaria* genus) depending on the geographical location and orientation (UV irradiation) of a vertical surface. Additional nutrition should be provided if the vascular plant seeds are mixed into the biological boosters 4.

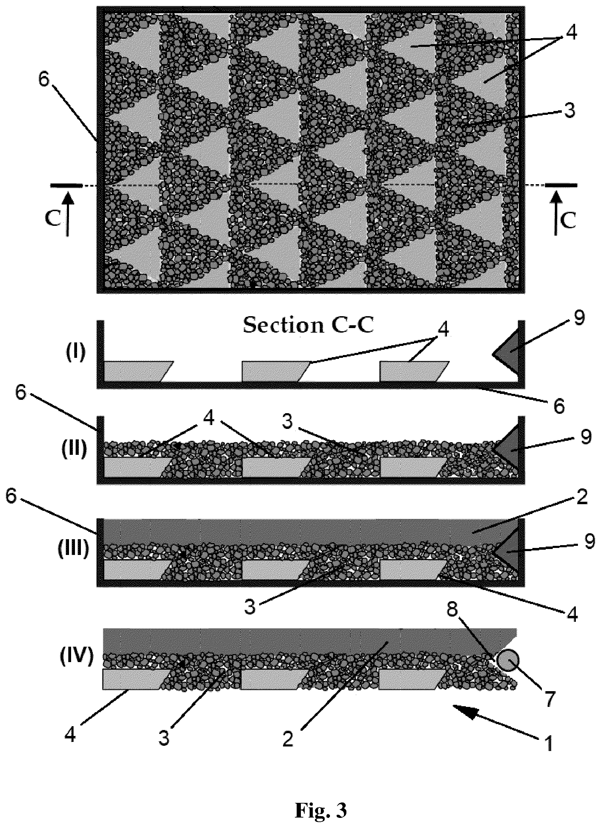

The general idea behind the proposed multilayer concrete wall panel 1 is to minimize the maintenance costs and increase the survivability of the bio-system. Thus, locally developed species are expected to establish on the wall in a long-term. Consequently, the biological boosters 4 are composed from the local forest topsoil, containing different bacteria strains, spores of fungi and mosses, specifically selected plant seeds and bio-degradable paper pulp. The bio-degradable paper pulp is used to increase the initial stiffness of the biological boosters 4 (with 1:1 mass ratio with the forest topsoil) enabling to form different shapes and resist the concrete flow during the pouring process. The initial stiffness of the biological boosters 4 is also required in the manufacturing stage of the wall panel 1. As schematically shown in Fig. 3, the specifically, i.e. triangularly shaped pieces of the biological boosters 4 are arranged on a surface of the formwork 6 in parallel rows before pouring the concrete layer 3, where each subsequent row of the biological boosters 4 is offset relative to the previous row of biological boosters 4 by 1/2 the width of the booster 4, thus the biological boosters 4 becoming trapped within the layer 3 and forming an integral part of the manufactured wall panel 1. The structural concrete layer 2 is then poured immediately after the layer 3, ensuring the required adhesion between the layers 2 and 3. After the initial set of the concrete layers 2 and 3, the temporary formwork 6 is removed, leaving biological boosters 4 integrated into the external layer 3, thus forming a specific pattern of the outer surface of the multilayer wall panel 1.

The selected triangular shape of the boosters 4, porosity, water permeability and surface texture of the layer 3 ensure the flow of irrigation and atmospheric water, trap the fine particulate matter and form microclimate promoting colonization by different plant species. The colonization of the biological boosters 4 under suitable conditions starts 2-4 months after attaching the wall panels 1 to the facade of the building. To ensure proper germination of accumulated spores and seeds in the biological boosters 4 and maintain the proper development of plants, an irrigation system is added on the top of the wall panel 1. The irrigation pipes 7, installed in the specifically designed grooves 8 in the upper edge of the wall panels 1, are based on usual drip line system. Such an irrigation system ensures an even distribution of water over the entire width of the wall panel 1. The amount of the required water varies from 0 to 2 litters/m² daily, depending on the selected plant species, climatic conditions, wall orientation (UV irradiation) and season of the year. Additional nutrition can be added to the irrigation system if the flowering plant seeds such as *geranium, aubrieta* or *cymbalaria* genus are mixed into the biological boosters 4.

In long-term, the biological boosters 4 gradually decay, penetrating to the open pores of the concrete layer 3 promoting further colonization of the wall assembly. The bio-degradation of the biological boosters 4 progresses simultaneously with the natural carbonation of the layer 3, allowing the plants to colonize the new surfaces in 1-2 years after the wall panel 1 installation.

### The manufacturing process of the wall panel

The wall panels 1 with dimensions 600x400 mm were produced using a formwork 6 as schematically shown in Fig. 3. To form a groove 8, the formwork 6 comprised a removable pre-assembled edge 9. The biological boosters 4 contained recycled paper pulp and topsoil with 1:1 mass ratio. Additionally *sedum, saxifraga* and *jovibarba* genus seeds were mixed into the biological boosters 4. As schematically shown in Fig. 3(I), the triangularly shaped pieces of the biological boosters 4 are arranged on a base of the formwork 6 in parallel rows, where each subsequent row of the biological boosters 4 is offset relative to the previous row of biological boosters 4 by 1/2 the width of the booster 4. The layer 3 made from pervious concrete was then poured over the biological boosters 4, as shown in Fig. 3(II), thus creating a frontal surface of a wall panel 1 with a pattern shown in a frontal view in Fig. 1 comprising the alternating triangular areas consisting of biological boosters 4 and corresponding areas of the layer 3 itself. The layer 3 has thickness of 20 mm in places where the biological boosters 4 are integrated, and 50 mm in places where the boosters 4 are absent. The following mechanical and physical properties of the layer 3 were selected: 28 day compressive strength 2.61 MPa; density 726 kg/m³; open porosity 27.6%; infiltration rate 0.036 m/s; pH of fresh concrete 12.6.

To ensure proper adhesion between the layers, the layer 2 was poured immediately after the layer 3, as shown in Fig. 3(III). The thickness of the layer 2 was 30 mm. The concrete of the layer 2 was prepared with the following physical and mechanical properties: 28 day compressive strength 83.7 MPa; permeability coefficient 6.7×10⁻¹⁵ m/sec; synthetic fiber dosage 9 kg/m³; the modulus of rupture 11.3 MPa.

After the initial set of the concrete layers 2 and 3 with the biological boosters 4 located within the layer 3, the temporary formwork 6 and the edge 9 were removed, thus obtaining the final multilayer wall panel 1 for greening of vertical surfaces shown in Fig. 3(IV). The pipes 7 forming the drip irrigation system were then installed in the grooves 8 in the upper edge of the multilayer wall panels 1. The daily amount of the required water varied from 0 to 2 l/m², depending on climatic conditions. The water was supplied from the nearby pond with no added nutrition. During the cold season (November - March) no additional water was provided.

## Claims

1. A multilayer wall panel (1) for greening of vertical surfaces, comprising a structural layer to be attached to the wall, and a second layer adapted for plant cultivation and facing outwards the wall, **characterized in that** the wall panel (1) comprises:
- a structural layer (2) produced from the high-performance fiber-reinforced concrete with a thickness from 20 to 50 mm, with the aggregate size ≤4mm, ensuring the strength and stiffness of the wall panel (1),
- a second layer (3) made from lightweight expanded clay pervious concrete suitable for biological colonization, having a variable thickness of 20 mm and 50 mm, forming regular 30 mm deep pattern of cavities (5) at the surface specifically designed as initial plant growth regions,
- biological boosters (4) of a triangular shape, located in the cavities (5) and designed to accelerate the initial colonization and plant growth on a multilayer wall panel (1), composed from a local forest topsoil and bio-degradable paper pulp with 1:1 mass ratio to increase the initial stiffness of the biological boosters (4),
- a drip line irrigation system consisting of pipes (7) arranged in grooves (8) in the upper edge of the multilayer wall panels (1).

2. The wall panel according to claim 1, **characterized in that** the biological boosters (4) are arranged within the layer (3) in parallel rows wherein each subsequent row of the biological boosters (4) is offset relative to the previous row of biological boosters (4) by 1/2 the width of the booster (4).

3. The wall panel according to claim 1, **characterized in that** the layer (2) having the 28-day compressive strength 83.7 MPa, permeability coefficient 6.7×10⁻¹⁵ m/sec, synthetic fiber dosage 9 kg/m³, the modulus of rupture 11.3 MPa.

4. The wall panel according to claim 1, **characterized in that** the layer (3) having the 28-day compressive strength 2.61 MPa, density 726 kg/m³, open porosity 27.6%, infiltration rate 0.036 m/s, pH of fresh concrete 12.6.

5. The wall panel according to claim 1, **characterized in that** the frontal surface of the wall panel (1) is composed of alternating triangular areas consisting of biological boosters (4) and corresponding areas of the layer (3) itself to ensure the proper flow of irrigation and atmospheric water, trap the fine particulate matter and form a microclimate promoting colonization by different plant species.

6. A method for production of a multilayer concrete wall panel system for greening of vertical surfaces, **characterized in that** the method comprises the following steps:
i) placing the triangularly shaped pieces of the biological boosters (4) adapted for plant cultivation on a base of a formwork (6) with a removable edge (9) in parallel rows, wherein each subsequent row of the biological boosters (4) is offset relative to the previous row of biological boosters (4) by 1/2 the width of the booster (4),
ii) pouring the layer (3) made from lightweight expanded clay pervious concrete suitable for biological colonization over the biological boosters (4),
iii) pouring the structural layer (2) produced from the high-performance fiber-reinforced concrete immediately after the layer (3),
(iv) after the initial set of the concrete layers (2) and (3), removing the temporary formwork (6) and the edge (9) to obtain the final multilayer wall panel (1) for greening of vertical surfaces with the frontal surface of the multilayer wall panel (1) comprising the alternating triangular areas consisting of biological boosters (4) and corresponding areas of the layer (3) itself;
(v) installing the pipes (7) forming the drip irrigation system in the grooves (8) in the upper edge of the multilayer wall panel (1).
